# EUROPEAN PATENT APPLICATION

(11) **EP 4 696 398 A1**
(43) Date of publication of application: **18.02.2026**
(21) Application number: 24195070.8
(22) Date of filing: 16.08.2024
(51) Int. Cl.: B01D 53/04, B01D 53/26, F28D 7/08

(54) **PARTICLE HEAT EXCHANGER, TEMPERATURE-SWING ADSORBER UNIT COMPRISING THE SAME, AND USES THEREOF**

(71) Applicant: Qaptis Sàrl, 1015 Lausanne (CH)
(72) Inventor: GREEN, Edward, Oakdale, PA 15071 (US)
(74) Representative: ABREMA SA

(57) **Abstract**

There is described a particle heat exchanger (PHE) comprising a vessel (VL) configured to contain particles (SP) and a heat exchanger structure (HEX) extending inside the vessel (VL) and configured to allow a thermal heat transfer fluid (HF) to selectively flow through the heat exchanger structure (HEX) to cause transfer of thermal energy between the thermal heat transfer fluid (HF) and the particles (SP) contained in the vessel (VL). The heat exchanger structure (HEX) includes at least one inlet manifold (100) and at least one outlet manifold (200), as well as a plurality of serpentine tubes (ST) connected between the inlet and outlet manifolds (100, 200), each serpentine tube (ST) including multiple parallel tube sections (STa) extending substantially vertically inside the vessel (VL) and connected in series by bent tube sections (STb).

## Description

### TECHNICAL FIELD

The present invention generally relates to a particle heat exchanger and a temperature-swing adsorber unit comprising the same, as well as uses thereof, including but not limited to carbon dioxide capture applications, especially for vehicles equipped with an on-board carbon dioxide capture system

### BACKGROUND OF THE INVENTION

A temperature-swing adsorber (TSA) in essence consists of a vessel that contains sorbent material, such as in the form of sorbent particles or pellets, that is used e.g. for gas separation. When the sorbent is cold, it adsorbs or captures gas molecules of a select size. When the sorbent is warmed, the captured gas is desorbed or released. This phenomenon is especially used to separate gaseous compounds such as water from air or carbon dioxide (CO₂) from exhaust gases.

Heating sorbent particles or pellets is difficult because they typically have small contact areas between them and therefore have low thermal conduction between pellets. The temperatures are furthermore low enough that radiation between particles is low. Convection heating is therefore the main source of heat transfer through the particles, and it is mostly low convection value as the velocity between the particles is very low. This low heat transfer through the sorbent pellets affects the cycle time of the temperature-swing adsorber. The cycle time can be reduced and the size/volume of the temperature-swing adsorbers can be reduced by improving the heat transfer in the sorbent bed.

The warming and cooling of the sorbent pellets is accomplished by either direct or indirect heating and cooling. The direct method of heating and cooling typically involves sending a relatively cool gaseous mixture through the temperature-swing adsorber to cause separation of the desired compound contained in the gaseous mixture by adsorption onto the sorbent material. Once the adsorption cycle is finished, a stream of hot purge gas is typically sent through the temperature-swing adsorber in direct contact with the sorbent material to drive the desorption process. This stream of hot purge gas increases the temperature of the sorbent material which releases the captured compound. In such case, the purge gas and captured compound released during the desorption process are mixed because they are in direct contact. A cold purge gas is then sent through the adsorber unit to reduce the temperature of the sorbent material before switching back to the adsorption cycle. In some instances, mixing the purge gas and the captured compound is acceptable. Especially, if the captured compound is separated in order to purify the stream of gaseous mixture, and that separated compound can just be disposed of, then mixing a purge gas with the separated compound is acceptable. However, if the separated compound is removed to recover a high-purity separated compound (such as in the case of carbon dioxide capture), mixing purge gas with the separated compound would defeat the very purpose of the separation by diluting the purity of the captured gas.

Indirect heating and cooling of the sorbent material is accomplished using a sealed heat exchanger to separate the heat transfer fluid (be it a cooling or heating fluid) from the captured compound. This allows the captured compound to retain a high purity. This is currently accomplished in a few different ways.

The most common method is to wrap a heat exchanger around the outside of the temperature-swing adsorber vessel containing the sorbent material. The drawback of this solution is that it takes a long time for heat to penetrate from the outer portion of e.g. a cylindrical vessel and reach the center thereof. As a result, the desorption cycle for this type of temperature-swing adsorber can be very long, often 12 to 24 hours. For long desorption cycles, the adsorption cycle will also be long. This typically requires the temperature-swing adsorber to contain a very large volume of sorbent material which drives up the cost as well as volume.

Another type of indirect particle heat exchanger is a coiled tube submerged within the sorbent material with the axis of the coil oriented vertically. This style of heat exchanger resembles a hollow spring and often has multiple coils nested together. The drawback of this solution is that gravity pulls/settles the sorbent pellets downwards away from the lower half of the horizontal coiled tube sections. In other words, only the top half of the horizontal coiled tube sections is typically in direct contact with the sorbent pellets. Thermal conduction surface area is therefore cut in two and the convective distance between the sorbent pellets and coiled tube becomes large. The result is significantly reduced heat transfer and poor performance.

Sometimes shell-and-tube heat exchangers are oriented in the vertical direction and the sorbent pellets are inserted inside the tubes. One drawback of this solution resides in the fact that the diameter of the tubes is required to be large to get enough cross-sectional area to minimize the pressure drop of the treated gas. The large tubes also create large spaces, which drive the size/diameter of the heat exchanger up, which in turn drives the cost up. Shell-and-tube heat exchangers with fixed heads are limited to low temperature rise of about 95°C, while shell-and-tube heat exchangers with floating heads are more expensive. Furthermore, dust from the sorbent pellets can create problems with operation of the floating head.

There have been some experiments using a single vertical tube in the center with multiple vertical fins attached around the tube. The fins are often very high to cover the area and they do not transfer the heat very well.

One style of particle heat exchanger that is used in material handling for moving packed beds is a shell-and-plate heat exchanger. In this type of particle heat exchangers, a series of heat exchanger plates are oriented vertically inside a shell with a set space between them. Particles flow at a very slow rate between the heat exchanger plates. The heat exchanger plates are often heated using steam or hot water. In a temperature-swing adsorber, no means are provided to allow movement of the particles, the sorbent pellets remaining stationary. Heat exchanger plates can offer a high surface area but they require significant volume and can double the size of the vessel.

Capturing and separating carbon dioxide (CO₂) from exhaust gases of vehicles is a growing concern. Using a temperature-swing adsorber to capture the CO₂ is one method for doing so. For practical applications, the temperature-swing adsorber must therefore be small enough to fit on a vehicle and be as much as possible light-weight to minimize impact on fuel efficiency.

There therefore remains a need for an improved particle heat exchanger that is particularly suited for use as part of a temperature-swing adsorber (TSA) unit.

### SUMMARY OF THE INVENTION

A general aim of the invention is to provide a particle heat exchanger that obviates the shortcomings and limitations of the known solutions of the prior art.

More specifically, an aim of the present invention is to provide such a particular heat exchanger that exhibits more uniform heat transfer characteristics.

A further aim of the invention is to provide such a solution that is particularly suited for an application as part of a temperature-swing adsorber unit, especially for the purpose of processing exhaust gases from internal combustion engines.

These aims, and others, are achieved thanks to the solutions defined in the claims.

There is accordingly provided a particle heat exchanger, the features of which are recited in claim 1, namely such a particle heat exchanger comprising a vessel configured to contain particles and a heat exchanger structure extending inside the vessel and configured to allow a thermal heat transfer fluid to selectively flow through the heat exchanger structure to cause transfer of thermal energy between the thermal heat transfer fluid and the particles contained in the vessel. According to the invention, the heat exchanger structure includes at least one inlet manifold and at least one outlet manifold, as well as a plurality of serpentine tubes connected between the inlet and outlet manifolds, each serpentine tube including multiple parallel tube sections extending substantially vertically inside the vessel and connected in series by bent tube sections.

In accordance with an embodiment of the invention, the particle heat exchanger may comprise a first pair of said inlet and outlet manifolds and at least a second pair of said inlet and outlet manifolds, each connected to a corresponding plurality of serpentine tubes. In such case, the first pair of inlet and outlet manifolds and the second pair of inlet and outlet manifolds are advantageously arranged inside the vessel such that the thermal heat transfer fluid is caused to flow from the inlet manifold to the outlet manifold of the first pair of inlet and outlet manifolds along a first main direction that is different from a second main direction along which the thermal heat transfer fluid is caused to flow from the inlet manifold to the outlet manifold of the second pair of inlet and outlet manifolds. Preferentially, the first and second pairs of inlet and outlet manifolds are arranged such that the second main direction is substantially opposite to the first main direction. Even more preferably, the plurality of serpentine tubes connected between the first pair of inlet and outlet manifolds and the plurality of serpentine tubes connected between the second pair of inlet and outlet manifolds are intertwined. This ensures a more uniform temperature distribution throughout the vessel and the particles.

By way of preference, the serpentine tubes are configured such that successive parallel tube sections are spaced apart by a distance that is comprised between 2 and 10 times a nominal diameter of the particles. By the same token, a spacing between adjacent serpentine tubes is preferably comprised between 2 and 10 times the nominal diameter of the particles.

In accordance with a preferred embodiment, the inlet and outlet manifolds are positioned at lower locations within the vessel near a bottom thereof.

The particle heat exchanger may further comprise a bottom support plate located within the vessel, below the heat exchanger structure, to contain the particles in close proximity to the heat exchanger structure.

A mean diameter of the serpentine tubes may especially be comprised between 5 and 25 millimetres.

By way of preference, the particle heat exchanger further comprises at least one gas inlet and at least one gas outlet to allow a gas mixture to selectively flow through the vessel and the particles contained therein. In particular, the at least one gas inlet and the at least one gas outlet may conveniently be provided at upper and lower ends of the vessel.

Also claimed in the use of the particle heat exchanger (PHE) of the invention for temperature-swing adsorption (TSA), in particular for temperature-vacuum swing adsorption (TVSA).

There is also provided a temperature-swing adsorber unit, the features of which are recited in claim 12, namely such a temperature-swing adsorber unit comprising a particle heat exchanger in accordance with the invention, provided with the aforementioned gas inlet and outlet, wherein the particles are sorbent pellets capable of adsorbing a selected compound from a gaseous mixture that is caused to flow through the vessel of the particle heat exchanger during an adsorption cycle, the sorbent pellets being capable of releasing the selected compound adsorbed by the sorbent pellets upon circulating heating fluid through the heat exchanger structure during a desorption cycle to cause heat to be transferred to the sorbent pellets to drive desorption of the selected compound.

The temperature-swing adsorber unit may especially be used for water capture or carbon dioxide capture, in particular from exhaust gas outputted by an internal combustion engine.

There is also claimed a vehicle equipped with an on-board carbon dioxide capture system including at least one temperature-swing adsorber unit in accordance with the invention for water capture or carbon dioxide capture from exhaust gas outputted by an internal combustion engine of the vehicle.

Further advantageous embodiments of the invention are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figure 1A is a perspective view of a temperature-swing adsorber (TSA) unit comprising a particle heat exchanger in accordance with an embodiment of the invention;
Figure 1B is side view of the TSA unit of Figure 1A;
Figure 1C is another side view of the TSA unit of Figures 1A-B taken from a different viewing angle;
Figure 1D is a cross-sectional view of the TSA unit of Figures 1A-C taken along a vertical plane A-A coinciding with a main vertical axis of the TSA unit, as indicated in Figure 1C, showing a heat exchanger structure of the particle heat exchanger;
Figure 2A is a perspective view of the heat exchanger structure visible in the cross-sectional view of Figure 1D;
Figure 2B is a perspective view of a bottom portion of the heat exchanger structure of Figure 2A;
Figure 2C is a perspective view of the heat exchanger structure of Figures 2A-B as viewed from a top side;
Figure 2D is a perspective view of the heat exchanger structure of Figures 2A-C where only one serpentine tube thereof is shown for the sake of illustration, connected between input and output manifolds of the heat exchanger structure; and
Figure 3 is a schematic diagram of a vehicle equipped with an on-board carbon dioxide capture system (CCS) including at least one temperature-swing adsorber unit (TSA) in accordance with the invention.

### DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein as defined by the appended claims.

The invention will be described in the particular context of a temperature-swing adsorber (TSA) unit, especially such a temperature-swing adsorber unit used for carbon dioxide capture, in particular from exhaust gas outputted by an internal combustion engine of a vehicle. It will be appreciated however that the temperature-swing adsorber unit may be used for other purposes, including e.g. as dryer, with a view to capture and extract water from the exhaust gas.

The adsorber unit could potentially be supplemented by the additional provision of a vacuum pump for operation as a temperature-vacuum swing adsorber (TVSA) unit with a view to improve recovery efficiency. Vacuum coupled with heat is indeed significantly more efficient than heat alone for desorption recovery of gas. In other words, when reference is made herein to temperature-swing adsorption (TSA), this should generally be understood as encompassing temperature-vacuum swing adsorption (TVSA) as a possible embodiment.

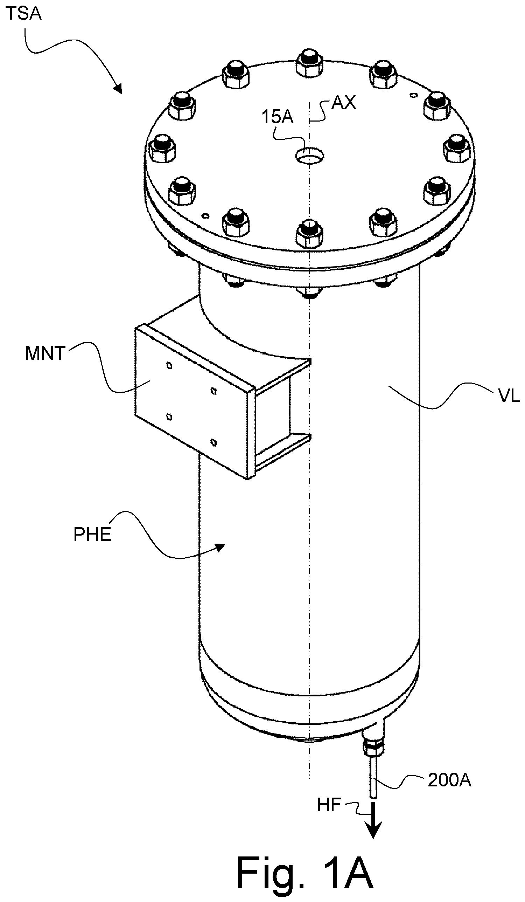

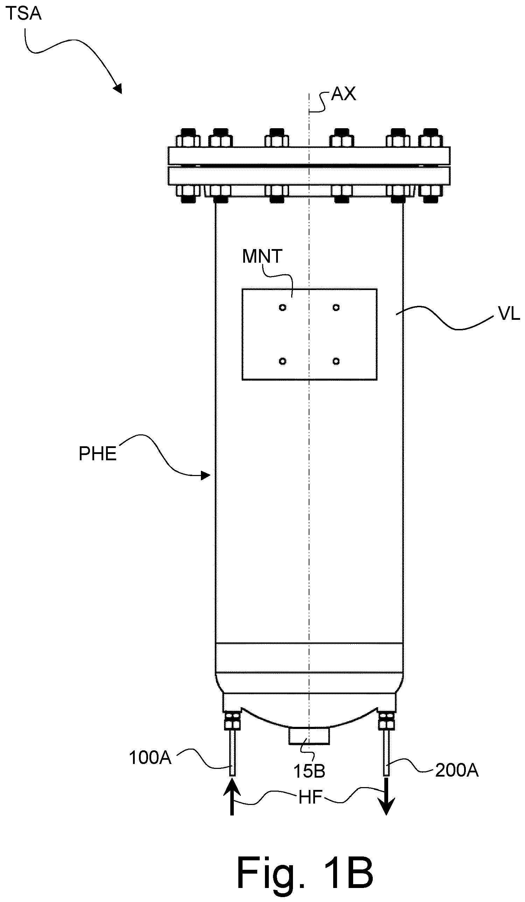

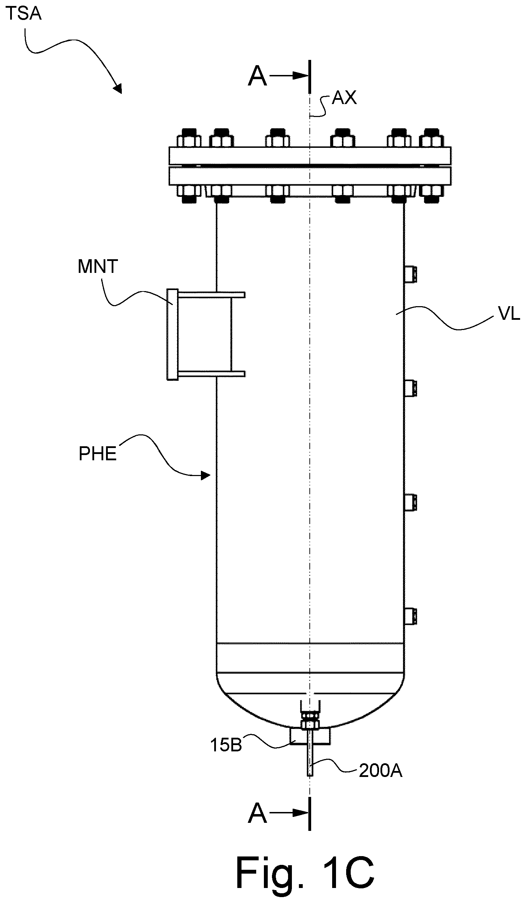

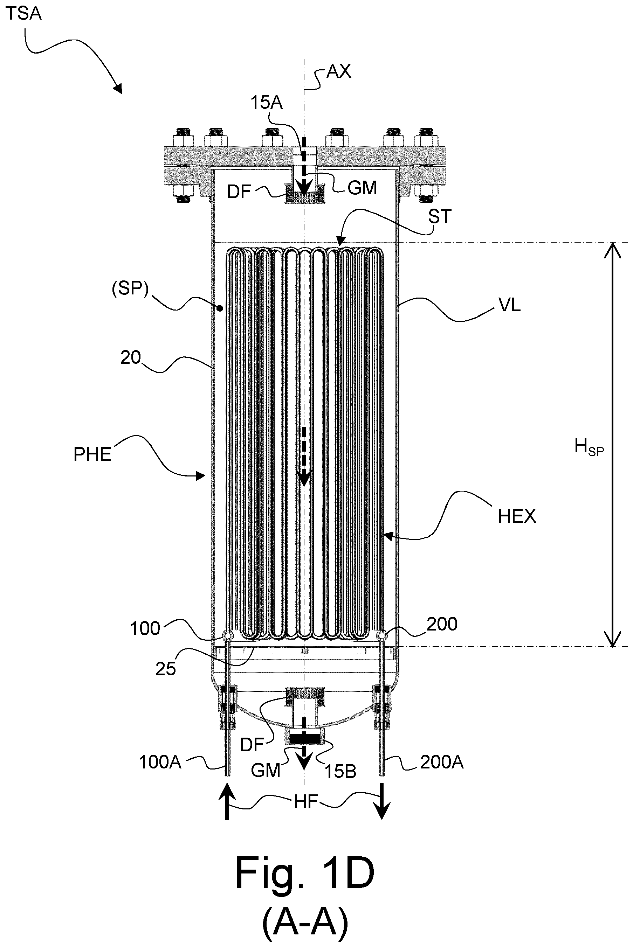

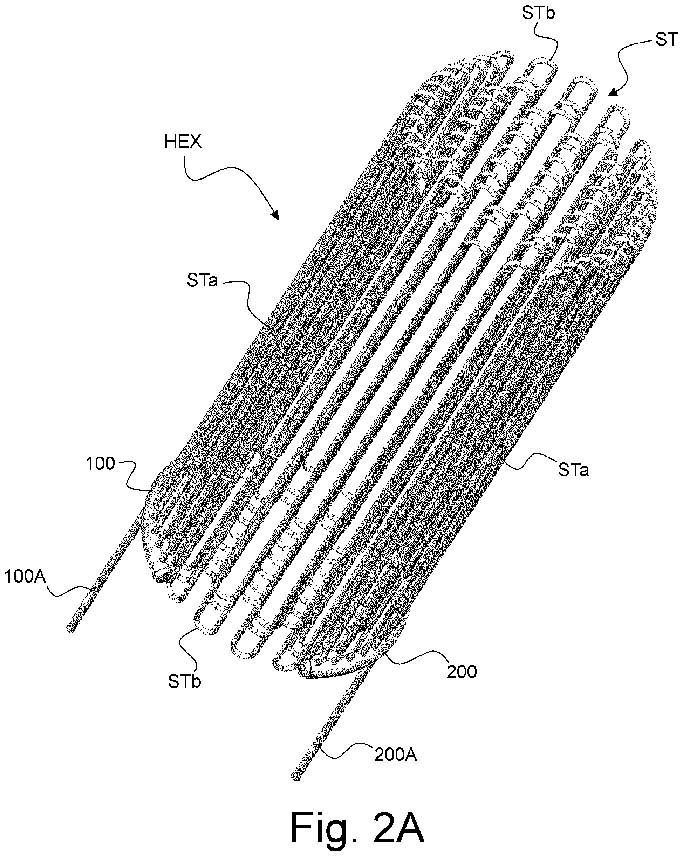

Figures 1A-D are illustrative of an exemplary temperature-swing adsorber unit, designated globally by reference sign TSA, comprising a particle heat exchanger PHE in accordance with an embodiment of the invention. The particle heat exchanger PHE essentially comprises a vessel VL configured to contain particles, designated SP, and a heat exchanger structure HEX (visible in Figure 1D and shown in isolation in Figures 2A-D) extending inside the vessel VL and configured to allow a thermal heat transfer fluid HF to selectively flow through the heat exchanger structure HEX to cause transfer of thermal energy between the thermal heat transfer fluid HF and the particles SP contained in the vessel VL. As schematically shown in Figures 1A, 1B and 1D, the thermal heat transfer fluid HF is fed to the heat exchanger structure HEX via a fluid inlet 100A and exits the heat exchanger structure HEX via a fluid outlet 200A, here designed as corresponding piping sections extending from a bottom end of the particle heat exchanger PHE.

In the illustrated example, the vessel VL advantageously exhibits an essentially cylindrical body whose main axis AX extends essentially vertically, The vessel VL may however exhibit any other adequate shape. As shown in Figures 1A-C, the body of vessel VSL is advantageously provided with a mount MNT to secure the vessel VSL to a corresponding support structure (not shown), advantageously such that upper and lower ends of the particle heat exchanger PHE remain accessible for coupling to additional ancillary equipment, including piping used to selectively cause circulation of the heat transfer fluid HF through the heat exchanger structure HEX, as well as circulation of gas mixtures through the vessel VL and the particles SP contained therein. In the illustrated example, beyond the aforementioned fluid inlet and outlet 100A, 200A, vessel VL is further provided with a gas inlet 15A and a gas outlet 15B, provided at upper and lower ends of the vessel VL, to allow a gas mixture GM to selectively flow through the vessel VL and the particles SP contained therein, including during an adsorption cycle of the temperature-swing adsorber unit TSA. An end of each gas inlet 15A and gas outlet 15B, inside the vessel VL, is preferably provided with a diffuser device DF to ensure adequate distribution of the gas mixture GM inside the vessel VL.

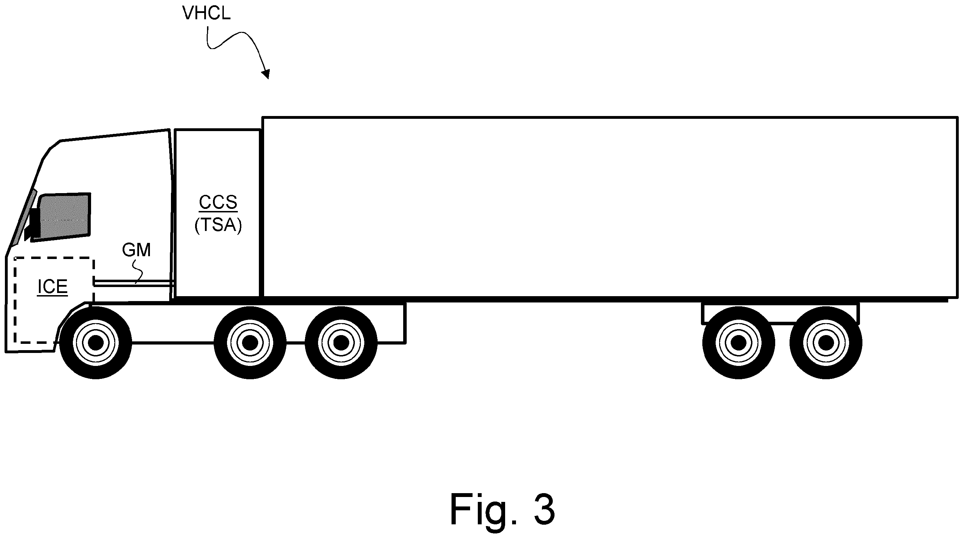

In that regard, the particles SP are preferably sorbent pellets that are capable of adsorbing a selected compound, designated CC, from the gaseous mixture GM. In the illustrated example, the gaseous mixture GM is advantageously exhaust gas outputted by an internal combustion engine ICE of a vehicle VHCL, such as a truck (see e.g. Figure 3), a naval ship, an agricultural vehicle, or the like. The sorbent pellets SP may especially be capable of capturing carbon dioxide contained in the exhaust gas GM. The sorbent pellets SP may in particular be porous ceramic sorbent pellets with high CO₂ sorption capacity, as known as such in the art. The sorbent pellets SP may for instance be made of lithium orthosilicate (Li₄SiO₄) or zeolite (such as zeolite 13X or 5A), which are of primary interest for carbon dioxide capture. In the event the temperature-swing adsorber unit TSA is used as dryer to capture and extract water compounds from the gaseous mixture GM, the sorbent pellets SP may e.g. be made of activated alumina, which is widely used as desiccant, silica gel (such as Sorbead^{®} from BASF Catalysts Germany GmbH), or zeolite (such as zeolite 3A).

The size of the sorbent pellets SP may vary depending on the applications. By way of illustration, the sorbent pellets SP may have a nominal diameter of 1/16^{th} of an inch (approximately 1.60 mm) to 1/4^{th} of an inch (approximately 6.35 mm). Smaller or larger pellet sizes could however be contemplated.

Furthermore, the particle heat exchanger PHE preferably comprises a (perforated) bottom support plate 25, visible in Figure 1D, located within the vessel VL, below the heat exchanger structure HEX, to contain the sorbent pellets SP in close proximity to the heat exchanger structure HEX. In effect, in use, the sorbent pellets SP are preferably constrained in volume whose height H_{SP} is defined between the bottom support plate 25 and an upper level slightly exceeding the height of the heat exchanger structure HEX, as schematically shown in Figure 1D.

A liner 20 is further provided inside the vessel VL to ensure some level of thermal insulation and reduce heat losses.

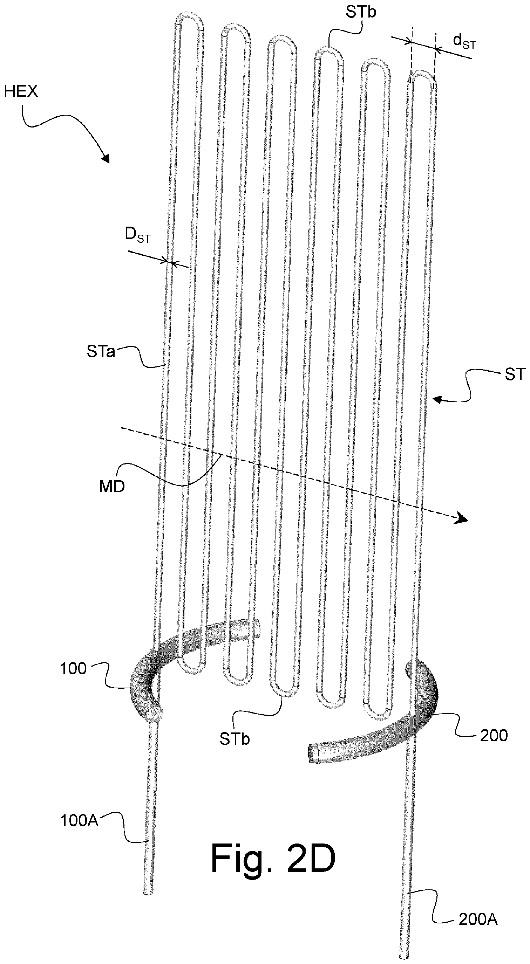

Referring to Figures 2A-D, there is shown an exemplary configuration of the heat exchanger structure HEX of the temperature-swing adsorber unit TSA of Figures 1A-D. Visible in Figures 2A-B and D are the aforementioned fluid inlet and outlets 100A, 200A that are connected to the heat exchanger structure HEX to allow circulation of the heat transfer fluid HF, such as a heating fluid that is caused to selectively circulate through the heat exchanger structure HEX during a desorption cycle of the temperature-swing adsorber unit TSA.

As shown in Figures 2A-D, the heat exchanger structure HEX includes at least one inlet manifold 100 (connected to the fluid inlet 100A) and at least one outlet manifold 200 (connected to the fluid outlet 200A), as well as a plurality of serpentine tubes ST connected between the inlet and outlet manifolds 100, 200. By way of illustration, as shown in Figures 2A-C, a total of thirteen serpentine tubes ST are provided between the inlet and outlet manifolds 100, 200, only one serpentine tube ST being depicted in Figure 2D for the sake of illustration. Each serpentine tube ST includes multiple parallel tube sections STa extending substantially vertically inside the vessel VL and connected in series by bent tube sections STb.

The cross-section of the serpentine tubes ST can be essentially circular. Alternatively, the cross-section may be oval, rectangular, or take any other desired shape to increase contact area with the surrounding sorbent pellets SP. Increased contact area leads to a corresponding increase of thermal heat transfer efficiency between heat exchanger structure HEX and the surrounding sorbent pellets SP.

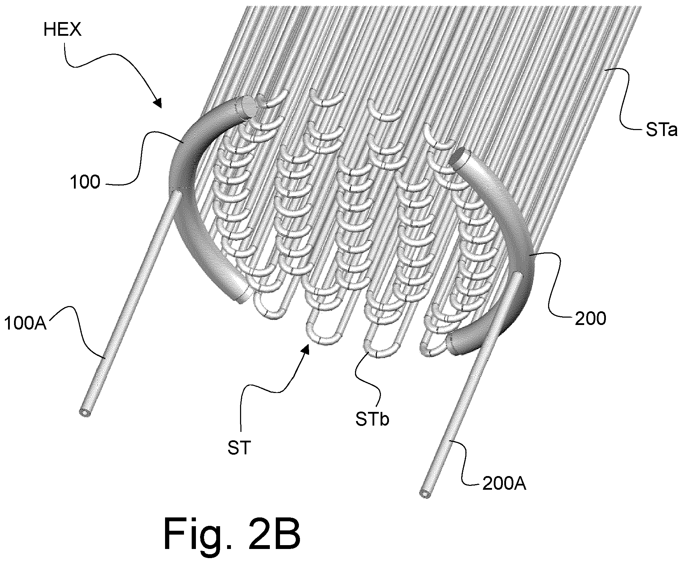

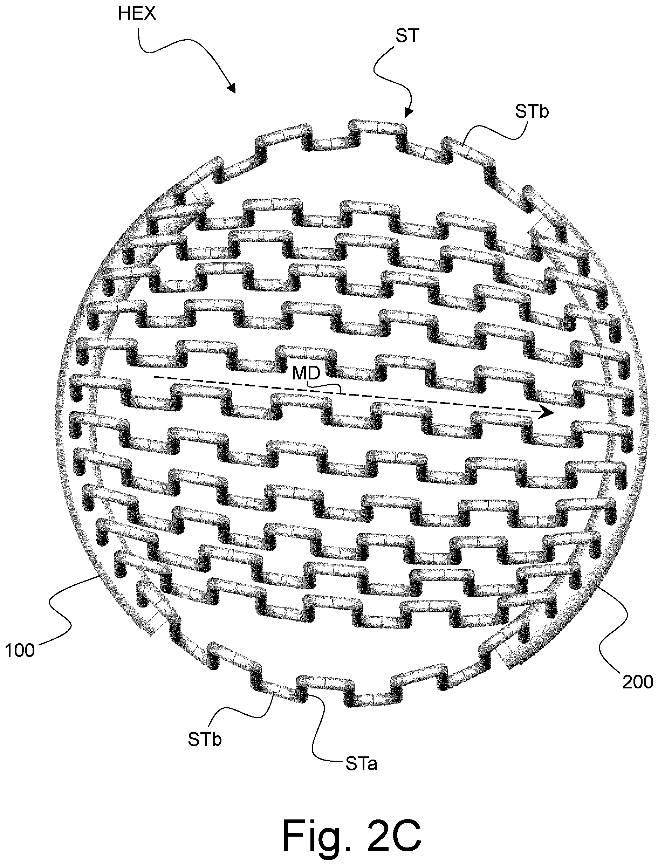

In the illustrated example, the inlet and outlet manifolds 100, 200 are preferably positioned at lower locations within the vessel VL, near a bottom thereof, namely immediately above the bottom support plate 25. Each of the inlet and outlet manifolds 100, 200 further exhibits the shape of an arc segment following in essence the inner geometry of the cylindrical vessel VL, the piping sections forming the fluid inlet and outlet 100A, 200A being connected to a middle portion of the underside of the inlet and outlet manifolds 100, 200, as shown in Figure 2B. The plurality of serpentine tubes ST in essence extends along a main direction MD between the inlet and outlet manifolds 100, 200, namely from left to right in the illustrations of Figures 2C and 2D. It will be appreciated however that the serpentine tubes ST do not necessarily extend within given plane but may be more or less curved, as shown in Figures 2A-C to occupy most of the inner volume of the vessel VL. It will also be understood that the main direction MD also designates the main direction along which the heat transfer fluid HF is caused to flow through the heat exchanger structure HEX.

By way of preference, the serpentine tubes ST are configured such that successive parallel tube sections STa are spaced apart by a distance d_{ST} (see Figure 2D) that is comprised between 2 and 10 times a nominal diameter D_{SP} of the particles SP. Distance d_{ST} may for instance be selected to be of about 25 mm, which is by no means limiting the scope of the invention. The purpose is mainly to ensure that the resulting spacing is large enough to accommodate the relevant particles SP and to maximize as much as possible contact between the particles SP and the heat exchanger structure HEX to achieve optimal heat transfer characteristics. By the same token, the spacing between adjacent serpentine tubes ST (i.e. substantially perpendicularly to the main direction MD) is advantageously also comprised between 2 and 10 times the nominal diameter D_{SP} of the particles SP.

A mean diameter D_{ST} of the serpentine tubes ST is advantageously comprised between 5 and 25 millimetres. In the illustrated example, the mean diameter D_{ST} of the serpentine tubes ST is selected to be of about 6.5 mm, which is by no means limiting the scope of the invention.

In the example shown in Figures 1A-D and 2A-D, one will appreciate that heat transfer fluid HT, such as heating fluid, will essentially flow along the main direction MD, it being understood that fluid HT will circulate up and down through each serpentine tube ST, from the inlet manifold 100 to the outlet manifold 200. As a result, a temperature gradient is inherently generated between the inlet manifold 100 and the outlet manifold 200, as temperature is transferred between the heat exchanger structure HEX and the surrounding particles SP.

In order to mitigate this temperature gradient and generate a more uniform temperature distribution throughout the vessel VL, one may contemplate to provide a first pair of inlet and outlet manifolds 100, 200 and at least a second pair of inlet and outlet manifolds 100, 200, each connected to a corresponding plurality of serpentine tubes ST, the first pair of inlet and outlet manifolds 100, 200 and the second pair of inlet and outlet manifolds 100, 200 being arranged inside the vessel VL such that the thermal heat transfer fluid HF is caused to flow from the inlet manifold 100 to the outlet manifold 200 of the first pair of inlet and outlet manifolds 100, 200 along a first main direction MD that is different from a second main direction MD along which the thermal heat transfer fluid HF is caused to flow from the inlet manifold 100 to the outlet manifold 200 of the second pair of inlet and outlet manifolds 100, 200.

More specifically, the first and second pairs of inlet and outlet manifolds 100, 200 could be arranged such that the second main direction MD is substantially opposite to the first main direction MD. This could especially be achieved by arranging the plurality of serpentine tubes ST connected between the first pair of inlet and outlet manifolds 100, 200 so as to be intertwined with the plurality of serpentine tubes ST connected between the second pair of inlet and outlet manifolds 100, 200. In effect, the resulting heat exchanger structure HEX would comprise two intertwined heat exchanger arrangements with opposite heat transfer fluid flow directions.

Referring again to the temperature-swing adsorber unit TSA shown in Figures 1A-D, one will understand that, during an adsorption cycle, the gaseous mixture GM is caused to flow through the vessel VL of the particle heat exchanger PHE, resulting in the selected compound CC (e.g. water or carbon dioxide) to be adsorbed by the sorbent pellets SP. Once the sorbent pellets SP have reached saturation, the temperature-swing adsorber unit TSA can be switched to a desorption cycle, during which heating fluid HF is caused to circulate through the heat exchanger structure HEX to transfer heat to the sorbent pellets SP and cause release of the selected compound CC adsorbed by the sorbent pellets SP. If required, a purge gas could be circulated through the vessel to assist regeneration of the sorbent material. Once the sorbent pellets SP are fully regenerated, a new adsorption cycle can be performed. During adsorption, a cooling fluid may be caused to circulate through the heat exchanger structure HEX to cool the sorbent material and favour adsorption.

The temperature-swing adsorber unit TSA of the invention can be used for multiple purposes. With regard to treatment of exhaust gases from internal combustion engines, and carbon dioxide capture more specifically, the temperature-swing adsorber unit TSA can be used either as dryer to remove water compounds present in the exhaust gases or as carbon dioxide capture device to capture carbon dioxide from e.g. predried/dehumidified exhaust gases. Evidently, the particular type of sorbent pellets SP needs to be selected accordingly.

It will furthermore be appreciated that pairs of temperature-swing adsorber units TSA would typically be used and operated in alternate adsorption/desorption cycles so as to ensure continuous adsorption and desorption of the selected compound(s).

As schematically shown in Figure 3, one or more of the temperature-swing adsorber units TSA could especially form part of an on-board carbon dioxide capture system CCS of a vehicle VHCL, such as a truck, a naval ship, an agricultural vehicle, or the like, to process exhaust gas GM produced by the internal combustion engine ICE of the vehicle VHCL and, especially, capture and store carbon dioxide.

As previously indicated, a vacuum pump could be added to the system to pull vacuum during the heating/desorption cycle. Operating units TSA as temperature-vacuum swing adsorber (TVSA) units can significantly improve the desorption efficiency and the capacity of the system.

Various modifications and/or improvements may be made to the above-described embodiments without departing from the scope of the invention as defined by the appended claims.

For instance, the particle heat exchanger of the invention could be used for other purposes than for adsorption. By way of example, the particle heat exchanger of the invention could be adapted to allow a continuous flow of heated particles through the vessel, in contact with the heat exchanger structure (in which case the particle heat exchanger needs to be configured to permit and favour such continuous flow of particles). In such case, thermal energy would be transferred from the heated particles to the heat exchanger structure and to the heat transfer fluid flowing therethrough, rather than the opposite.

### LIST OF REFERENCE NUMERALS AND SIGNS USED THEREIN

- TSA: temperature-swing adsorber unit
- 15A: gas inlet of temperature-swing adsorber unit TSA
- 15B: gas outlet of temperature-swing adsorber unit TSA
- DF: diffuser device
- PHE: particle heat exchanger
- VL: vessel
- AX: main axis of vessel VL
- MNT: mount for securing vessel VL to support structure
- 20: thermal liner
- 25: bottom plate
- SP: particles / sorbent pellets
- HEX: heat exchanger structure extending inside vessel VL
- HF: heat transfer fluid / heating fluid
- 100: inlet manifold of heat exchanger structure HEX
- 100A: fluid inlet
- 200: outlet manifold of heat exchanger structure HEX
- 200A: fluid outlet
- ST: serpentine tubes extending between inlet and outlet manifolds 100, 200
- STa: parallel tube sections of serpentine tubes ST extending substantially vertically inside the vessel VL
- STb: bent tube sections of serpentine tubes ST connecting parallel tube sections STa in series
- MD: main direction along which the serpentine tubes ST extend between the inlet manifold 100 and the outlet manifold 200 / main direction along which the heat transfer fluid HF flows from the inlet manifold 100 to the outlet manifold 200
- d_{ST}: distance separating successive parallel tube sections STa
- D_{ST}: mean diameter of serpentine tubes ST
- D_{SP}: nominal diameter of particles / sorbent pellets SP
- H_{SP}: height occupied by particles / sorbent pellets SP within vessel VL
- GM: gaseous mixture caused to flow through vessel VL of temperature-swing adsorber unit TSA during adsorption cycle / exhaust gas from internal combustion engine ICE
- CC: selected compound captured/adsorbed from gaseous mixture GM (e.g. water, carbon dioxide)
- CCS: carbon dioxide capture system
- VHCL: vehicle with on-board carbon dioxide capture system CCS (e.g. truck, naval ship, agricultural vehicle, etc.)
- ICE: internal combustion engine of vehicle VHCL

## Claims

1. A particle heat exchanger (PHE) comprising a vessel (VL) configured to contain particles (SP) and a heat exchanger structure (HEX) extending inside the vessel (VL) and configured to allow a thermal heat transfer fluid (HF) to selectively flow through the heat exchanger structure (HEX) to cause transfer of thermal energy between the thermal heat transfer fluid (HF) and the particles (SP) contained in the vessel (VL),
wherein the heat exchanger structure (HEX) includes at least one inlet manifold (100) and at least one outlet manifold (200), as well as a plurality of serpentine tubes (ST) connected between the inlet and outlet manifolds (100, 200), each serpentine tube (ST) including multiple parallel tube sections (STa) extending substantially vertically inside the vessel (VL) and connected in series by bent tube sections (STb).

2. The particle heat exchanger (PHE) according to claim 1, comprising a first pair of said inlet and outlet manifolds (100, 200) and at least a second pair of said inlet and outlet manifolds (100, 200), each connected to a corresponding plurality of serpentine tubes (ST),
and wherein the first pair of inlet and outlet manifolds (100, 200) and the second pair of inlet and outlet manifolds (100, 200) are arranged inside the vessel (VL) such that the thermal heat transfer fluid (HF) is caused to flow from the inlet manifold (100) to the outlet manifold (200) of the first pair of inlet and outlet manifolds (100, 200) along a first main direction (MD) that is different from a second main direction (MD) along which the thermal heat transfer fluid (HF) is caused to flow from the inlet manifold (100) to the outlet manifold (200) of the second pair of inlet and outlet manifolds (100, 200).

3. The particle heat exchanger (PHE) according to claim 2, wherein the first and second pairs of inlet and outlet manifolds (100, 200) are arranged such that the second main direction (MD) is substantially opposite to the first main direction (MD).

4. The particle heat exchanger (PHE) according to claim 3, wherein the plurality of serpentine tubes (ST) connected between the first pair of inlet and outlet manifolds (100, 200) and the plurality of serpentine tubes (ST) connected between the second pair of inlet and outlet manifolds (100, 200) are intertwined.

5. The particle heat exchanger (PHE) according to any one of the preceding claims, wherein the serpentine tubes (ST) are configured such that successive parallel tube sections (STa) are spaced apart by a distance (d_{ST}) that is comprised between 2 and 10 times a nominal diameter (D_{SP}) of the particles (SP), and/or
wherein a spacing between adjacent serpentine tubes (ST) is comprised between 2 and 10 times the nominal diameter (D_{SP}) of the particles (SP).

6. The particle heat exchanger (PHE) according to any one of the preceding claims, wherein the inlet and outlet manifolds (100, 200) are positioned at lower locations within the vessel (VL) near a bottom thereof.

7. The particle heat exchanger (PHE) according to any one of the preceding claims, further comprising a bottom support plate (25) located within the vessel (VL), below the heat exchanger structure (HEX), to contain the particles (SP) in close proximity to the heat exchanger structure (HEX).

8. The particle heat exchanger (PHE) according to any one of the preceding claims, wherein a mean diameter (D_{ST}) of the serpentine tubes (ST) is comprised between 5 and 25 millimetres.

9. The particle heat exchanger (PHE) according to any one of the preceding claims, further comprising at least one gas inlet (15A) and at least one gas outlet (15B) to allow a gas mixture (GM) to selectively flow through the vessel (VL) and the particles (SP) contained therein.

10. The particle heat exchanger (PHE) according to claim 9, wherein the at least one gas inlet (15A) and the at least one gas outlet (15B) are provided at upper and lower ends of the vessel (VL).

11. Use of the particle heat exchanger (PHE) of any one of the preceding claims for temperature-swing adsorption, in particular for temperature-vacuum swing adsorption.

12. A temperature-swing adsorber unit (TSA) comprising a particle heat exchanger (PHE) in accordance with claim 9 or 10, wherein the particles are sorbent pellets (SP) capable of adsorbing a selected compound (CC) from a gaseous mixture (GM) that is caused to flow through the vessel (VL) of the particle heat exchanger (PHE) during an adsorption cycle, the sorbent pellets (SP) being capable of releasing the selected compound (CC) adsorbed by the sorbent pellets (SP) upon circulating heating fluid (HF) through the heat exchanger structure (HEX) during a desorption cycle to cause heat to be transferred to the sorbent pellets (SP) to drive desorption of the selected compound (CC).

13. Use of the temperature-swing adsorber unit (TSA) of claim 12 for water capture or carbon dioxide capture.

14. Use according to claim 13 for water capture or carbon dioxide capture from exhaust gas outputted by an internal combustion engine (ICE).

15. A vehicle (VHCL) equipped with an on-board carbon dioxide capture system (CCS) including at least one temperature-swing adsorber unit (TSA) in accordance with claim 12 for water capture or carbon dioxide capture from exhaust gas outputted by an internal combustion engine (ICE) of the vehicle (VHCL).
